# EUROPÄISCHE PATENTSCHRIFT

(11) **EP 2 145 099 B1**
(45) Veröffentlichungstag und Bekanntmachung des Hinweises auf die Patenterteilung: **22.08.2012**
(21) Anmeldenummer: 08749847.3
(22) Anmeldetag: 29.04.2008
(51) Int. Cl.: F02M 37/22, B01D 17/04

(54) **KRAFTSTOFFZUFÜHREINRICHTUNG, INSBESONDERE FÜR EINE BRENNKRAFTMASCHINE**
FUEL SUPPLY DEVICE, PARTICULARLY FOR AN INTERNAL COMBUSTION ENGINE
DISPOSITIF D'AMENÉE DE CARBURANT DESTINÉ EN PARTICULIER À UN MOTEUR À COMBUSTION INTERNE

(30) Priorität: 16.05.2007 DE 202007007120 U
(43) Veröffentlichungstag der Anmeldung: 20.01.2010
(60) Teilanmeldung: 12176902.0
(73) Patentinhaber: Mann + Hummel GmbH, 71638 Ludwigsburg (DE)
(72) Erfinder: KIEDAISCH, Steffi, 73037 Göppingen (DE); KLEIN, Martin, 71634 Ludwigsburg (DE)
(86) Internationale Anmeldenummer: PCT/EP2008/055243
(87) Internationale Veröffentlichungsnummer: WO 2008/138749

(56) Entgegenhaltungen:
- EP-A- 0 060 106
- EP-A- 0 699 462
- CA-A- 963 400
- DE-A1- 3 440 506
- DE-A1-102004 032 251
- DE-A1-102005 015 194
- GB-A- 2 109 695
- GB-A- 2 138 693
- JP-A- 2004 305 921
- US-A- 3 187 895
- US-A- 4 253 954

## Beschreibung

### Technisches Gebiet

Die Erfindung betrifft eine Kraftstoffzuführeinrichtung, insbesondere für eine Brennkraftmaschine der im Oberbegriff des Anspruchs 1 angegebenen Gattung.

### Stand der Technik

In der EP 1 256 707 A2 ist ein Kraftstofffilter mit wasserabscheidenden Mitteln beschrieben. Dieser insbesondere für Dieselkraftstoff eines Verbrennungsmotors dienende Kraftstofffilter umfasst zwei Filterstufen, wobei eine erste Filterstufe zur Partikelfiltration vorgesehen ist. Diese Filterstufe besteht aus einem hydrophilen Filtermaterial, welches die Eigenschaft besitzt, im Kraftstoff fein verteiltes Wasser zu größeren Wasserteilchenelementen koaleszieren zu lassen. Der ersten Filterstufe ist eine zweite Filterstufe aus einem hydrophoben Material nachgeschaltet, wobei sich diese zweite Filterstufe koaxial innerhalb der ersten Filterstufe befindet. Diese Anordnung ist deshalb gewählt, dass der die erste Filterstufe verlassende und Wasseranteile enthaltende Kraftstoff umlenkungsfrei auf das Material der letzten Filterstufe trifft.

Für diese Art der Ausgestaltung eines Kraftstofffilters werden große Flächen des hydrophoben Materials der ersten Stufe sowie des hydrophilen Materials der zweiten Stufe benötigt. Als Nachteil wird auch angesehen, dass auch bereits koaleszierte Wasserteilchenelemente mit dem Kraftstoffstrom gegen die zweite Filterstufe bewegt werden und von der zweiten Stufe noch ein großer Anteil der Wasserelemente abgeschieden werden muss. Eine gattungsgemäße Kraftstoffzuführeinrichtung ist beispielsweise aus der DE 10 2004 032 251 A1 bekannt. Im Übrigen beschreibt die GB 2 109 695 A eine Vorrichtung zum Abscheiden von Wasser aus Kraftstoff, bei welcher ein stromaufwärtiger Filter und ein Koalescerelement horizontal in einem Gehäuse angeordnet sind.

Der vorliegenden Erfindung liegt daher die Aufgabe zu Grunde, eine Kraftstoffzuführeinrichtung der gattungsgemäßen Art zu schaffen, durch die eine zuverlässige Wasserabscheidefähigkeit bei deutlich reduziertem Einsatz von koaleszierendem Material und hydrophobem Material gegeben ist.

Diese Aufgabe wird durch eine Kraftstoffzuführeinrichtung mit den Merkmalen des Anspruchs 1 gelöst.

### Offenbarung der Erfindung

Durch die Erfindung wird eine Kraftstoffzuführeinrichtung geschaffen, bei der der Wasserabscheider unabhängig vom Kraftstofffilter, das heißt dem Partikelfilter, ist, so dass jedes dieser Bauteile nach den jeweiligen Aufgaben optimal ausgelegt werden kann. Es hat sich dabei herausgestellt, dass die erforderlichen Flächen zur Wasserabscheidung und die dafür notwendigen Medien deutlich reduziert werden können und je nach Anwendungsfall die hydrophilen und hydrophoben Materialien bezüglich ihrer Fläche je nach Anwendungsfall 15-mal bis 50-mal kleiner ausgeführt werden können als bei herkömmlichen Anordnungen, in denen diese mit Partikelfiltern kombiniert sind. Eine weitere Steigerung bezüglich des Abscheidegrades ergibt sich durch die Umlenkung des Kraftstoffs zwischen der ersten und der zweiten Abscheidestufe.

Gemäß einer ersten Ausführungsform der Erfindung umfasst die erste Abscheidestufe mindestens eine Lage eines hydrophilen Mediums. Dabei ist die mindestens eine Lage des hydrophilen Mediums im Wesentlichen horizontal angeordnet. Der Durchtritt des Kraftstoffs durch das hydrophile Medium erfolgt vertikal von oben nach unten, so dass die aus dem hydrophilen Medium austretenden Wassertropfen bereits in Richtung auf einen im unteren Bereich befindlichen Sammelraum bewegt werden.

Die zweite Abscheidestufe umfasst vorzugsweise mindestens eine Lage eines hydrophoben Mediums, wobei diese Lage des hydrophoben Mediums insbesondere geneigt oder im Wesentlichen vertikal angeordnet ist. Eine geneigte oder vertikale Anordnung hat dabei den Vorteil, dass die sich an der zweiten Abscheidestufe zurückgehaltenen Wassertropfen aufgrund ihrer Schwerkraft von der Fläche abfallen und ebenfalls in den darunter liegenden Sammelraum geführt werden. Die Abscheidewirkung auf dem Weg des Kraftstoffs zwischen der ersten und der zweiten Abscheidestufe kann dadurch begünstigt werden, dass die Strömung des Kraftstoffs derart umgelenkt wird, dass der Winkel des Strömungsweges 90° oder größer ist, wobei die Wasserbestandteile aufgrund ihrer größeren Massenträgheit dieser Umlenkung nicht folgen.

Gemäß einer nicht erfindungsgemäßen Ausgestaltung umfasst der Wasserabschelder ein Im Wesentlichen zylindrisches Gehäuse, dessen Längsachse mindestens annähernd vertikal verläuft, wobei in dem Gehäuse ein Einsatzelement vorgesehen ist, das ein vertikales Rohrstück umfasst. Das Einsatzelement kann je nach Anforderungen gestaltet sein und weist vorzugsweise ein kreisringförmiges Stützgitter auf, auf dem das hydrophile Material angeordnet ist. Des Weiteren ist es zweckmäßig, dass das Rohrstück radiale Öffnungen aufweist, die von dem hydrophoben Material überdeckt sind, und wobei die radialen Öffnungen sich in einem vertikal unterhalb des Stützgitters liegenden Bereich des Rohrstückes befinden.

Eine besonders zweckmäßige Ausgestaltung des nicht erfindungsgemäßen Kraftstoffablaufs wird darin gesehen, dass sich an das obere Ende des Rohrstücks der Kraftstoffablauf anschließt, der in einem Deckelteil des Gehäuses ausgebildet ist. In diesem Deckelteil ist vorzugsweise eine im Wesentlichen ringförmige Kraftstoffeintrittskammer gebildet, in die ein Eintrittskanal tangential mündet. Dadurch wird in der Kraftstoffeintrittskammer eine Strömung des Kraftstoffs erreicht, durch die das hydrophile Material der ersten Abscheidestufe im Wesentlichen gleichmäßig beaufschlagt wird. Darüber hinaus ist es zweckmäßig, dass an dem unteren Ende des Rohrstücks ein tellerförmiges Leitelement angeordnet ist, dessen Außenumfang zur Innenwandung des Gehäuses einen Abstand aufweist. Auf diese Weise wird erreicht, dass die Wasserbestandteile entlang des Leltelementes In Richtung auf den Rand geleitet werden, so dass sie durch den zur Innenwandung des Gehäuses verbleibenden Abstand in den Sammelraum eintreten können. Nach oben ist der Sammelraum im Wesentlichen durch das Leitelement von der darüber gebildeten Abscheidekammer getrennt. Zur vereinfachten Handhabung bei der Montage können das Einsatzelement und das Deckelteil eine Baueinheit bilden.

Erfindungsgemäß umfasst der Wasserabscheider ein im Wesentlichen zylindrisches Gehäuse mit zumindest annähernd horizontaler Längsachse und ist in dem Gehäuse ein Innenteil angeordnet, das sich in Längsrichtung des Gehäuses erstreckt, und in dem eine Kraftstoffeintrittskammer und eine Kraftstoffaustrittskammer gebildet sind. Dieses Innenteil kann über angeformte Scheibenelemente in dem Gehäuse gehalten und mit Dichtungsringen versehen sein, so dass sich eine Abdichtung des Sammelraums für das abgeschiedene Wasser gegen den Kraftstoffizulauf und Kraftstoffablauf ergibt.

Erfindungsgemäß weist die Kraftstoffeintrittskammer eine längliche Erstreckung auf und besitzt an ihrer Unterseite Öffnungen, die von dem hydrophilen Material überspannt sind. Auch bei dieser Ausführung ergibt sich ein Durchtritt des Kraftstoffs durch das hydrophile Material vertikal von oben nach unten, so dass die aus dem hydrophilen Material austretenden Wassertropfen bereits eine Bewegungsrichtung zum Sammelraum hin haben. Bei einer solchen Ausgestaltung des Gehäuses und des Innenteils befindet sich vorzugsweise die Kraftstoffeintrittskammer oberhalb der Längsachse des Gehäuses und der unterhalb der Kraftstoffeintrittskammer gebildete Hohlraum des Gehäuses dient in seinem oberen Bereich als Abscheidekammer und im unteren Bereich als Wassersammelraum. Weiterhin ist es zweckmäßig, dass über dem Innenteil in dem Gehäuse eine Zwischenkammer gebildet ist, von der eine Öffnung zur Kraftstoffaustrittskammer führt, und diese Öffnung von dem hydrophoben Material überdeckt ist.

### Kurze Beschreibung der Zeichnungen

Ausführungsbeispiele der Erfindung werden nachstehend anhand der Zeichnung näher erläutert. In der Zeichnung zeigt:
- Fig. 1: eine schematische Darstellung einer Kraftstoffleitung vom Tank zu einer Brennkraftmaschine,
- Fig. 2: einen nicht erfindungsgemäßen Wasserabscheider in Explosionsdarstellung,
- Fig. 3: eine perspektivische Ansicht eines Deckelteils mit einem Einsatzelement des Wasserabscheiders gemäß Fig. 2,
- Fig. 4: einen Längsschnitt durch den Wasserabscheider mit den Einzelteilen gemäß Fig. 2,
- Fig. 5: eine Ausführungsform eines Wasserabscheiders im Längsschnitt,
- Fig. 6 u. 7: perspektivische Darstellungen eines Innenteils aus Fig. 5,
- Fig. 8: eine stirnseitige Ansicht des Innenteils gemäß Fig. 6,
- Fig. 9: einen Schnitt entlang der Linie IX - IX in Fig. 8.

### Ausführungsform(en) der Erfindung

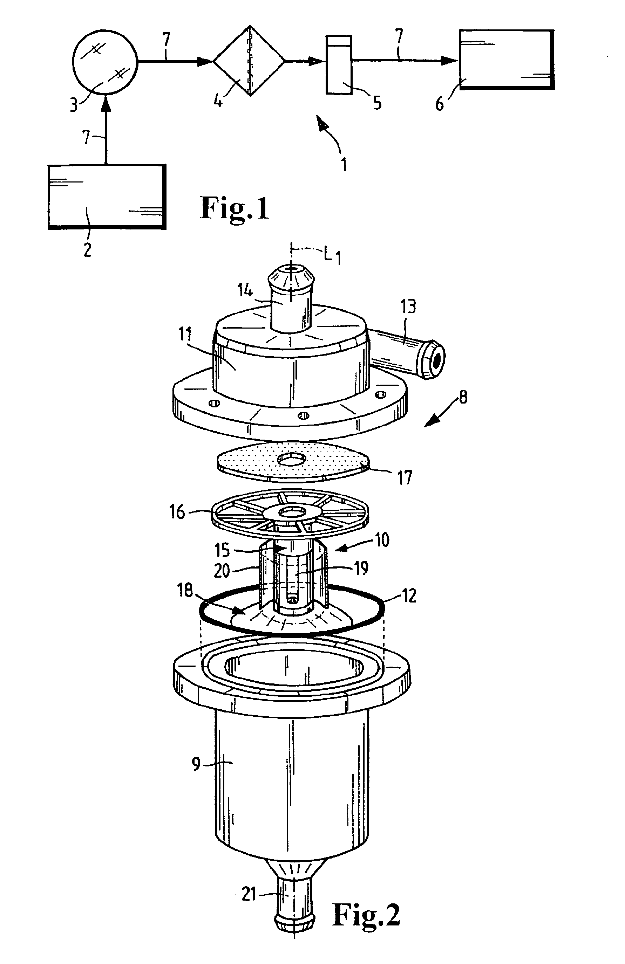

In Fig. 1 ist schematisch eine Kraftstoffzuführung 1 für eine Brennkraftmaschine 6 gezeigt, wobei in einer an einem Kraftstofftank 2 beginnenden Kraftstoffleitung 7 aufeinanderfolgend eine Kraftstoffpumpe 3, ein Kraftstofffilter 4 und ein Wasserabscheider 5 angeordnet sind. Der mittels der Kraftstoffpumpe 3 aus dem Kraftstofftank 2 geförderte Kraftstoff wird zunächst im Kraftstofffilter 4 von Partikeln gereinigt und dann einem Wasserabscheider 5 zugeführt. Die Funktionen "Partikelfiltration" und "Wasserabscheidung" sind dabei getrennt und werden in zwei separaten Bauteilen realisiert.

Die Fig. 2 zeigt in Explosionsdarstellung einen Wasserabscheider 8, der ein im Wesentlichen zylindrisches Gehäuse 9 sowie ein darin einbringbares Einsatzelement 10 und ein Deckelteil 11 umfasst. Zwischen den Flanschen des Gehäuses 8 und des Deckelteils 11 wird zur Abdichtung ein O-Ring 12 angeordnet. Am Deckelteil 11 sind ein tangential zu einer vertikalen Längsachse L₁ des Gehäuses 8 verlaufender Eintrittskanal 13 für den Kraftstoff und ein koaxial zur Längsachse L₁ angeordneter Kraftstoffablauf 14 ausgebildet. Im gezeigten Beispiel sind das Deckelteil 11, der Eintrittskanal 13 und der Kraftstoffablauf einstückig ausgeführt.

Das Einsatzelement 10 umfasst ein zentrisches Rohrstück 15, an dessen oberen Ende ein kreisringförmiges Stützgitter 16 angeordnet ist, welches das Rohrstück 15 umgibt, und auf dem eine entsprechende Scheibe bzw. Lage 17 aus hydrophilem Material zu platzieren ist. Der Kraftstoffablauf 14 ragt innerhalb des Deckelteils 11 so weit nach unten, dass er mit dem oberen Ende des Rohrstücks 15 verbunden ist. Am unteren Ende des Rohrstücks 15 befindet sich ein tellerförmiges Leitelement 18. Das Rohrstück 15 weist in einem vertikal unterhalb des Stützgitters 16 und in einem Abstand zu diesem liegenden Bereich radiale Öffnungen 19 auf, die von einer Schicht oder Lage 20 aus einem hydrophoben Material überdeckt sind. Das untere Ende des Gehäuses 9 ist trichterförmig gestaltet, wobei an der tiefsten Stelle ein Wasserablassstutzen 21 angeordnet ist.

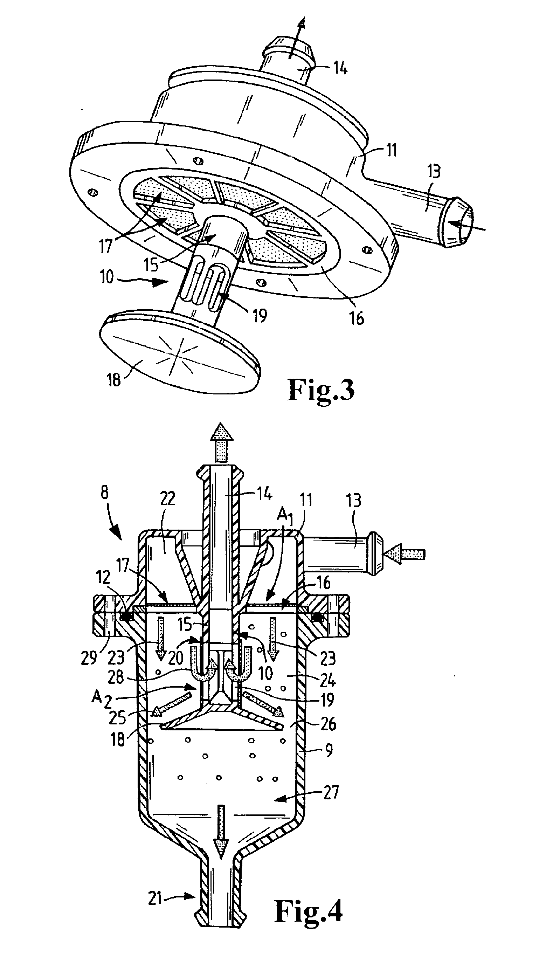

Fig. 3 zeigt das Deckelteil 11 mit dem Einsatzelement 10 in vergrößerter Darstellung. Daraus ist ersichtlich, dass das Rohrstück 15 über den Umfang verteilt mehrere radiale Öffnungen 19 besitzt, die vor der Montage der Baueinheit aus Einsatzelement 10 und Deckelteil 11 sowie dem Gehäuse 9 mit der aus Fig. 2 ersichtlichen Lage 20 oder mehreren Lagen aus hydrophobem Material versehen werden. Hierzu wird dieser Bereich des Rohrstücks 15 mit einem geeigneten Material, beispielsweise einem Siebgewebe aus Polyamid, umwickelt. Am unteren Ende des Rohrstücks 15 befindet sich das Leitelement 18 und am oberen Ende das Stützgitter 16, durch dessen Öffnungen die Lage 17 aus hydrophilem Material zu sehen ist. Am Deckelteil 11 befinden sich der Eintrittskanal 13 und der Kraftstoffablauf 14.

Die Fig. 4 zeigt einen Längsschnitt durch den Wasserabscheider 8 gemäß Fig. 2. Das Gehäuse 9 und das Deckelteil 11 sind an ihren jeweiligen Flanschen unter Zwischenfügung des O-Ringes 12 zusammengefügt und werden beispielsweise mittels nicht dargestellter Schrauben, die in entsprechende Bohrungen 29 gedreht werden, befestigt. Im Deckelteil 11 ist eine ringförmige Kraftstoffeintrittskammer 22 gebildet, in die der Eintrittskanal 13 mündet. Die Kraftstoffeintrittskammer 22 wird an ihrer Unterseite von der Lage 17 aus hydrophilem Material begrenzt, welche auf dem Stützgitter 16 des Einsatzelementes 10 liegt und somit die erste Abscheidestufe A₁ bildet. Der Kraftstoff mit den darin emulgierten Wasseranteilen tritt von der Kraftstoffeintrittskammer 22 durch die Lage 17 aus hydrophilem Material, das koaleszierend wirkt und somit Wassertropfen gebildet werden, die ebenso wie der Kraftstoff in Richtung der Pfeile 23 eine Strömungsrichtung senkrecht nach unten in die Abscheidekammer 24 haben. Aufgrund der größeren Masse werden die gebildeten Wassertropfen ihre Richtung beibehalten, wobei zusätzlich die auf sie wirkende Gravitationskraft mit dazu beiträgt, dass die Wassertropfen zum Leitelement 18 geführt werden und von dort gemäß den Pfeilen 25 zum Ringspalt 26 und durch diesen hindurch in den Sammelraum 27 gelangen. Der Ringspalt 26 ist groß genug, um die Wassertropfen in den Sammelraum 27 durchzulassen, im Übrigen wirkt das Leitelement 18 als Trennung zwischen der Abscheidekammer 24 und dem Sammelraum 27. An den Wasserablassstutzen 21 schließt sich ein in der Zeichnung nicht dargestelltes Ventil an, das nur zum Zweck des Ablassens von in dem Sammelraum 27 gesammeltem Wasser kurzzeitig geöffnet wird, im Übrigen aber geschlossen ist.

Der in der Abscheidekammer 24 im Wesentlichen von den Wasserbestandteilen getrennte Kraftstoff wird aufgrund der am Kraftstoffablauf 14 anliegenden Saugwirkung der Brennkraftmaschine durch die radialen Öffnungen 19 in das Rohrstück 15 bewegt, wie dies durch die Pfeile 28 gezeigt ist. Durch die Lage 20 aus hydrophobem Material, die eine zweite Abscheidestufe A₂ bildet, werden Wasseranteile, die trotz der Umlenkung des Kraftstoffs in Richtung auf die radialen Öffnungen noch mitgeführt werden, an der Lage 20 zurückgehalten, so dass ausschließlich Kraftstoffanteile durch die radialen Öffnungen 19 in das Innere des Rohrstücks 15 gelangen. Die an der Lage 20 zurückgehaltenen Wasseranteile werden ebenso wie die übrigen in der Abscheidekammer 24 befindlichen Wassertropfen durch den Ringspalt 26 in den Sammelraum 27 geführt.

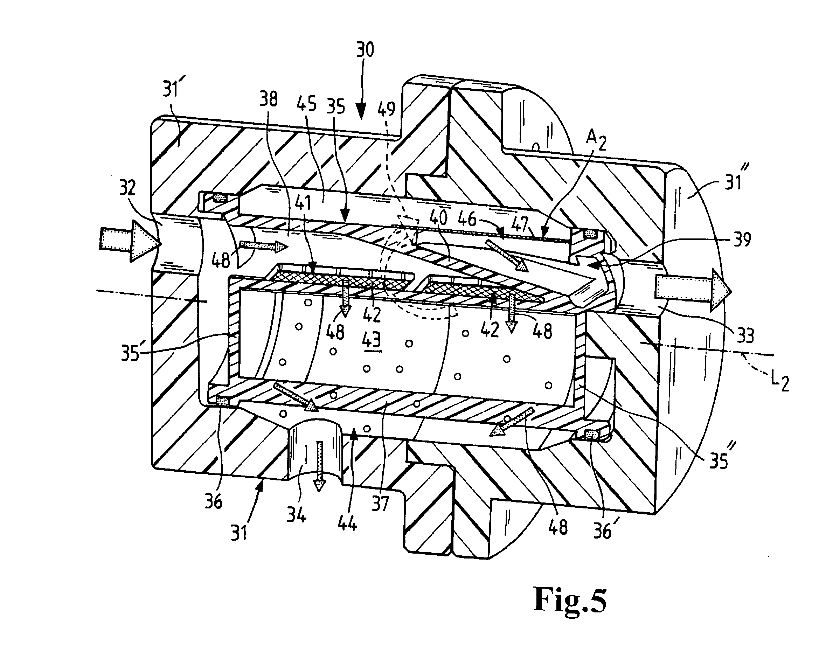

Die Fig. 5 zeigt eine Ausführungsform eines erfindungsgemäßen Wasserabscheiders 30 in einem leicht perspektivischen Längsschnitt. Dieser umfasst ein im Wesentlichen zylindrisches Gehäuse 31, das aus zwei Gehäuseteilen 31' und 31" besteht, die im Verbindungsbereich konzentrisch ineinander gesteckt und an Flanschen verbunden sind. Das Gehäuse 31 nimmt im in einer Kraftstoffzuführeinrichtung eingebauten Zustand eine zumindest annähernd horizontale Lage bezüglich seiner Längsachse L₂ ein. Stirnseitig ist im Gehäuseteil 31' eine Eintrittsöffnung 32 für den Kraftstoff vorgesehen, während eine Austrittsöffnung 33 in der Stirnseite des Gehäuseteils 31" angeordnet ist. Eine Wasserablassöffnung 34 ist an der Unterseite des Gehäuses 31 im Bereich der Mantelfläche des Gehäuseteils 31' vorhanden.

In das Gehäuse 31 ist ein längliches Innenteil 35 eingesetzt, das über endseitige Scheiben 35', 35" verfügt, die zur Halterung des Innenteils 35 im Gehäuse 31 dienen. Die Scheiben 35', 35" sind an ihrer jeweiligen Umfangsfläche mit einem Dichtungsring 36, 36' versehen. Das längliche Innenteil 35 ist exzentrisch zur Längsachse L₂ angeordnet und verläuft zwischen der Eintrittsöffnung 32 und der Austrittsöffnung 33. Wie aus dieser Darstellung deutlich wird, befindet sich das Innenteil oberhalb der Mitte des Gehäuses 31, die durch die Längsachse L₂ markiert ist. Um die endseitigen Scheiben 35' und 35" zu stabilisieren, ist eine Stützstrebe 37 vorgesehen. Das Innenteil 35 ist hohl und in diesem sind eine Eintrittskammer 38 und eine Austrittskammer 39 gebildet, die durch eine schräg verlaufende Trennwand 40 getrennt sind.

Das Innenteil 35 weist einen flachen Boden auf, der die Eintrittskammer auf ihrer Unterseite begrenzt und in dem großflächige Öffnungen 41 angeordnet sind. Diese Öffnungen sind vollständig mit einer Schicht oder Lage 42 aus einem hydrophilen Material überdeckt, welches die erste Abscheidestufe A₁ bildet. Unter dem Innenteil 35 befindet sich aufgrund der exzentrischen Lage ein relativ großer Hohlraum, dessen oberer Teil als Abscheideraum 43 und unterer Teil als Sammelraum 44 für das abgeschiedene Wasser dient. Über dem Innenteil 35 ist in dem Abstand zur Innenwandung des Gehäuses 31 eine Zwischenkammer 45 gebildet. An der über der Austrittskammer 39 befindlichen Wand des Innenteils 35 befindet sich eine Öffnung 46, die die Zwischenkammer 45 mit der Austrittskammer 39 verbindet. Diese Öffnung 46 ist mittels einer Lage 47 oder auch mehreren Lagen eines hydrophoben Materials abgedeckt, welches die zweite Abscheidestufe A₂ bildet.

Der emulgiertes Wasser enthaltende Kraftstoff tritt durch die Eintrittsöffnung 32 in die Eintrittskammer 38 und von dort durch die erste Abscheidestufe A₁ mit der Lage 42 in den Abscheideraum 43 und zwar gemäß Pfeilen 48 senkrecht nach unten. Die koaleszierende Wirkung der Abscheidestufe A₁ führt dazu, dass die Wasserbestandteile Tropfen bilden. Während aufgrund der Massenträgheit und der Gravitationskraft die Wassertropfen weiter nach unten in den Sammelraum 44 geführt werden, erfolgt einen Umlenkung des Kraftstoffs nach oben in die Zwischenkammer 45 wie dies durch Pfeil 49 dargestellt ist. Von der Zwischenkammer 45 tritt der Kraftstoff durch die Lage 47 aus hydrophobem Material also der zweiten Abscheidestufe A₂ und die Öffnung 46 in die Austrittskammer 39, um von dort zum Ansaugsystem der Brennkraftmaschine zu gelangen. An der Lage 47 werden Wasserbestandteile, die möglicherweise mit dem Kraftstoffstrom mitgerissen wurden, zurückgehalten und aufgrund der Wölbung der Lage 47 zur Seite hin abgeführt, so dass sie in den Sammelraum 44 absinken können.

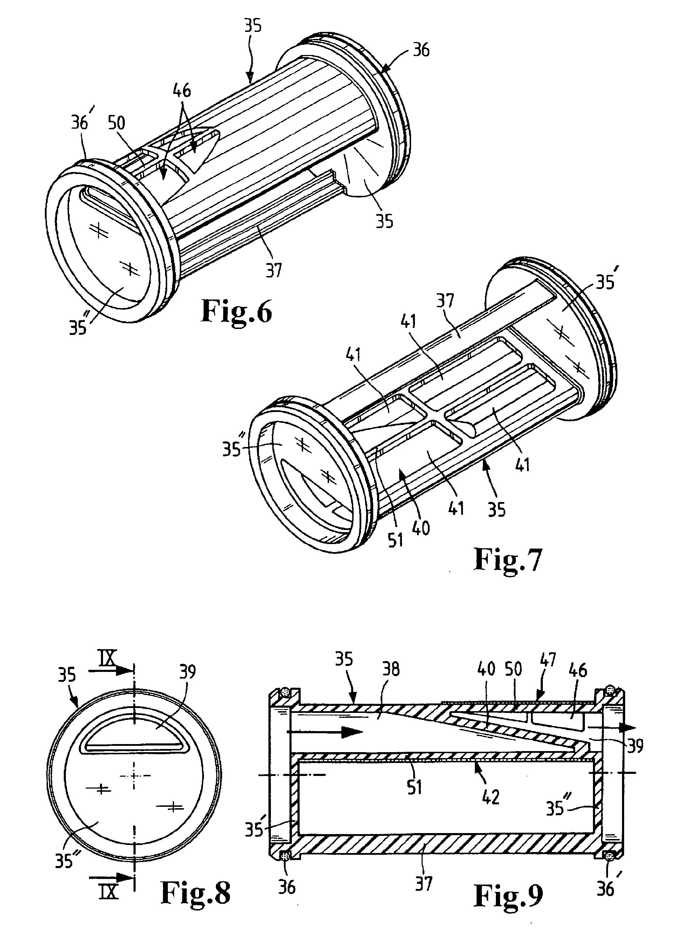

Die Fig. 6 und 7 zeigen zwei perspektivische Darstellungen des Innenteils 35, das zum Einsatz in dem Wasserabscheider gemäß Fig. 5 vorgesehen ist. Für gleiche Teile stimmen die Bezugszeichen mit denjenigen der Fig. 5 überein. Es ist aus diesen Darstellungen ersichtlich, dass das Innenteil 35 die endseitigen Scheiben 35' und 35" besitzt, an deren Außenumfang die Dichtungen 36 und 36' angeordnet sind. Da das Innenteil 35 exzentrisch zu den endseitigen Scheiben 35' und 35" angeordnet ist, dient die Stützstrebe 37 zur mechanischen Stabilität und Lagesicherung der Scheiben 35' und 35" im eingebauten Zustand wie er in Fig. 5 dargestellt ist. Aus den Fig. 6 und 7 ist die Lage und Form der jeweiligen Öffnungen 41 und 46 ersichtlich, wobei die Öffnungen 46 Stützstreben 50 und die Öffnungen 41 Stützstreben 51 aufweisen, damit die Lagen aus hydrophilem bzw. hydrophobem Material einen guten Halt haben. In Fig. 7 ist unter den Öffnungen 41 die Trennwand 40 sichtbar.

Die Fig. 8 zeigt die stirnseitige Ansicht des Innenteils 35 mit Blick auf die Scheibe 35" sowie die Austrittskammer 39. Die Fig. 9 zeigt den Längsschnitt durch das Innenteil 35 bis zu der Linie IX-IX in Fig. 8. Die Bezugszeichen in Fig. 9 stimmen für gleiche Teile mit denjenigen der Fig. 5 bis 8 überein. Es ergibt sich daraus, dass die Lage 42 auf der Unterseite des Innenteils 35 angeordnet ist, was aus Gründen der besseren Zugänglichkeit zur Applizierung der Lage 42 zweckmäßig ist. Die Lage 47 befindet sich auf der Oberseite des Innenteils 35 und wird dort durch die Stützstege 50 abgestützt. Bezüglich der weiteren Merkmale in Fig. 9 wird auf die jeweilige Beschreibung zu den Fig. 5 bis 8 verwiesen.

## Patentansprüche

1. Kraftstoffzuführeinrichtung (1), insbesondere für eine Brennkraftmaschine (6), mit einem Partikelfilter und einem Wasserabscheider, wobei der Wasserabscheider (5, 8, 30) als ein dem Kraftstofffilter (4) nachgeordnetes separates Bauteil ausgebildet ist und eine erste Abscheidestufe (A₁) mit koaleszierendem Material sowie eine zweite Abscheidestufe (A₂) mit hydrophobem Material umfasst und die Abscheidestufen (A₁, A₂) derart angeordnet sind, dass zwischen diesen eine Umlenkung des Kraftstoffs erfolgt, **dadurch gekennzeichnet dass** der Wasserabscheider (30) ein im Wesentlichen zylindrisches Gehäuse (31) mit zumindest annähernd horizontaler Längsachse (L₂) umfasst und in dem Gehäuse (31) ein Innenteil (35) angeordnet ist, das sich in Längsrichtung des Gehäuses (31) erstreckt und in dem eine Kraftstoffeintrittskammer (38) und eine Kraftstoffaustrittskammer (39) gebildet sind, wobei die Kraftstoffeintrittskammer (38) eine längliche Erstreckung aufweist und an ihrer Unterseite Öffnungen (41) besitzt, die von dem hydrophilen Material der ersten Abscheidestufe (Ai) überspannt sind und wobei sich die Kraftstoffeintrittskammer (38) oberhalb der Längsachse (L₂) des Gehäuses (31) befindet und der unterhalb der Kraftstoffeintrittskammer (38) gebildete Hohlraum des Gehäuses (31) als Abscheideraum (43) und Wassersammelraum (44) dient.

2. Kraftstoffzuführeinrichtung nach Anspruch 1, **dadurch gekennzeichnet, dass** die erste Abscheidestufe (A₁) mindestens eine Lage (17, 42) eines hydrophilen Mediums umfasst.

3. Kraftstoffzuführeinrichtung nach Anspruch 1 oder 2, **dadurch gekennzeichnet, dass** die mindestens eine Lage (17, 42) des hydrophilen Mediums im Wesentlichen horizontal angeordnet und darunter eine Abscheidekammer (24, 43) gebildet ist.

4. Kraftstoffzuführeinrichtung nach einem der Ansprüche 1 bis 3, **dadurch gekennzeichnet, dass** die zweite Abscheidestufe (A₂) mindestens eine Lage (20, 47) eines hydrophoben Mediums umfasst.

5. Kraftstoffzuführeinrichtung nach Anspruch 4, **dadurch gekennzeichnet, dass** die mindestens eine Lage (20, 47) des hydrophoben Mediums geneigt oder im Wesentlichen vertikal angeordnet ist.

6. Kraftstoffzuführeinrichtung nach einem der Ansprüche 1 bis 5, **dadurch gekennzeichnet, dass** die Oberfläche des hydrophoben Mediums gewölbt ist.

7. Kraftstoffzuführeinrichtung nach einem der Ansprüche 1 bis 6, **dadurch gekennzeichnet, dass** die Umlenkung der Strömung des Kraftstoffs zwischen der ersten und zweiten Abscheidestufe (A₁, A₂) einen Winkel von 90° oder größer aufweist.

8. Kraftstoffzuführeinrichtung nach einem der Ansprüche 1 bis 7, **dadurch gekennzeichnet, dass** über dem Innenteil (35) in dem Gehäuse (31) eine Zwischenkammer (45) gebildet ist, von der eine Öffnung (46) zur Kraftstoffaustrittskammer (39) führt und diese Öffnung (46) von dem hydrophoben Material der zweiten Abscheidestufe (A₂) überdeckt ist.

## Claims

1. Fuel delivery device (1), in particular for an internal combustion engine (6), with a particle filter and a water separator, the water separator (5, 8, 30) being designed as separate component disposed downstream of the fuel filter (4) and comprising a first separating stage (A₁) with coalescent material as well as a second separating stage (A₂) with hydrophobic material and the separating stages (A₁, A₂) being arranged in such a way that the fuel is deviated between these two stages, **characterized in that** the water separator (30) comprises a substantially cylindrical housing (31) with at least an approximately horizontal longitudinal axis (L₂) and that an interior portion (35) is disposed in the housing (31), that extends in longitudinal direction of the housing (31) and in which a fuel intake chamber (38) and a fuel discharge chamber (39) are formed, the fuel intake chamber (38) featuring an elongate extension and having at its bottom side openings (41) covered by the hydrophilic material of the first separating stage (A₁) and the fuel intake chamber (38) being placed above the longitudinal axis (L₂) of the housing and the hollow space of the housing (31) formed underneath the fuel intake chamber (38) serving as separating chamber (43) and water collecting chamber (44).

2. Fuel delivery device according to claim 1, **characterized in that** the first separating stage (A₁) comprises at least one layer (17, 42) of a hydrophilic medium.

3. Fuel delivery device according to claim 1 or 2, **characterized in that** the at least one layer (17, 42) of the hydrophilic medium is arranged substantially horizontally and that a separating chamber (24, 43) is formed underneath it.

4. Fuel delivery device according to one of the claims 1 to 3, **characterized in that** the second separating stage (A₂) comprises at least one layer (20, 47) of a hydrophobic medium.

5. Fuel delivery device according to claim 4, **characterized in that** the at least one layer (20, 47) of the hydrophobic medium is inclined or arranged substantially vertically.

6. Fuel delivery device according to one of the claims 1 to 5, **characterized in that** the surface of the hydrophobic medium is curved.

7. Fuel delivery device according to one of the claims 1 to 6, **characterized in that** the deviation of the fuel flow between the first and the second separating stage (A₁, A₂) features an angle of 90° or larger.

8. Fuel delivery device according to one of the claims 1 to 7, **characterized in that** above the (35) in the housing (31) an intermediate chamber (45) is formed from which an opening (46) leads to the fuel discharge chamber (39) and that this opening (46) is covered by the hydrophobic material of the second separating stage (A₂).

## Revendications

1. Dispositif d'alimentation en carburant (1), notamment pour un moteur à combustion interne (6), avec un filtre à particules et un séparateur d'eau, le séparateur d'eau (5, 8, 30) étant exécuté en tant que composant séparé placé en aval du filtre à carburant (4) et comprenant un premier niveau de séparation (A₁) avec un matériau coalescent et un deuxième niveau de séparation (A₂) avec un matériau hydrophobe et les niveaux de séparation (A₁, A₂) étant disposés de telle manière que le carburant soit dévié entre ces deux niveaux, **caractérisé en ce que** le séparateur d'eau (30) comprend un boîtier essentiellement cylindrique (31) avec un axe longitudinal au moins quasi horizontal (L₂) et qu'une partie intérieure (35) est disposée dans le boîtier (31), laquelle s'étend en sens longitudinal du boîtier (31) et dans laquelle sont formées une chambre d'entrée de carburant (38) et une chambre de sortie de carburant (39), la chambre d'entrée de carburant (38) évoluant de manière longitudinale et comportant sur sa face inférieure des ouvertures (41) qui sont recouvertes par le matériau hydrophile du premier niveau de séparation (A₁) et la chambre d'entrée de carburant (38) étant située au-dessus de l'axe longitudinal (L₂) du boîtier (31) et la cavité formée en dessous de la chambre d'entrée de carburant (38) du boîtier (31) servant d'espace de séparation (43) et d'espace de collecte d'eau (44).

2. Dispositif d'alimentation en carburant selon la revendication 1, **caractérisé en ce que** le premier niveau de séparation (A₁) comprend au moins une couche (17, 42) d'un médium hydrophile.

3. Dispositif d'alimentation en carburant selon la revendication 1 ou 2, **caractérisé en ce que** la couche (17, 42), au moins au nombre d'une, de médium hydrophile est essentiellement disposée à l'horizontale et que, en dessous, une chambre de séparation (24, 43) est formée.

4. Dispositif d'alimentation en carburant selon l'une des revendications 1 à 3, **caractérisé en ce que** le deuxième niveau de séparation (A₂) comprend au moins une couche (20, 47) d'un médium hydrophobe.

5. Dispositif d'alimentation en carburant selon la revendication 4, **caractérisé en ce que** la couche (20, 47), au moins au nombre d'une, de médium hydrophobe est inclinée ou est essentiellement disposée à la verticale.

6. Dispositif d'alimentation en carburant selon l'une des revendications 1 à 5, **caractérisé en ce que** la surface du médium hydrophobe est bombée.

7. Dispositif d'alimentation en carburant selon l'une des revendications 1 à 6, **caractérisé en ce que** la déviation du flux de carburant entre le premier et le deuxième niveau de séparation (A₁, A₂) forme un angle de 90° ou supérieur.

8. Dispositif d'alimentation en carburant selon l'une des revendications 1 à 7, **caractérisé en ce qu'**une chambre intermédiaire (45) est formée dans le boîtier (31) au-dessus de la partie intérieure (35), dont une ouverture (46) mène à la chambre de sortie de carburant (39), cette ouverture (46) étant recouverte par le matériau hydrophobe du deuxième niveau de séparation (A₂).
